# EUROPÄISCHE PATENTANMELDUNG

(11) **EP 1 072 539 A1**
(43) Veröffentlichungstag der Anmeldung: **31.01.2001**
(21) Anmeldenummer: 00115357.6
(22) Anmeldetag: 15.07.2000
(51) Int. Cl.: B65G 1/137, B65G 67/02, B65G 67/20

(54) **Verfahren zum Verladen einer Ladung und Verladevorrichtung zur Anwendung in dem Verfahren**

(30) Priorität: 28.07.1999 DE 19935072
(71) Anmelder: Mannesmann VDO Aktiengesellschaft, 60388 Frankfurt am Main (DE)
(72) Erfinder: Fischer, Dirk, Dr., 63739 Aschaffenburg (DE); Naggatz-Zink, Uwe, 64823 Gross-Umstadt (DE); Hartl, Wilfried, 64850 Schaafheim (DE)
(74) Vertreter: Klein, Thomas, Dipl.-Ing.

(57) **Zusammenfassung**

Bei einem Verfahren zur Bereitstellung einer aus mehreren Ladungseinheiten (23) bestehenden Ladung (16) werden die Ladungseinheiten (23) vor dem Einführen in einen Laderaum (19) auf einer Bereitstellungslinie (11) zusammengestellt. Diese Bereitstellungslinie (11) dient zugleich als Puffer (15), um eine in einer Nachbearbeitungsstation (8) nachbearbeitete Ladungseinheit ohne Verzögerung an vorbestimmter Stelle einschleusen zu können. Ein schwerkraftbetätigbares Vertikalförderelement (21) ermöglicht dabei das mühelose Umsetzen der Ladungseinheiten (23) von einer oberen Ebene (18) in eine darunterliegende Ebene (24).

## Beschreibung

Die Erfindung betrifft ein Verfahren zum Verladen einer mehrere Ladungseinheiten umfassenden Ladung in einen Laderaum, insbesondere eines Kraft- oder Schienenfahrzeugs, bei welchem Verfahren die Ladungseinheiten zunächst in einer Prüfstation auf einen vorhandenen Fehler geprüft werden, eine fehlerhafte Ladungseinheit ausgeschleust und einer Nacharbeitsstation zugeführt wird und bei dem ein Puffer vorgesehen ist, der das Einschleusen der zuvor ausgeschleusten Ladungseinheit an einer gewünschten Position der Ladungen ermöglicht und bei dem die Ladungseinheiten in verschiedenen Ebenen geführt werden. Weiterhin betrifft die Erfindung eine Transportvorrichtung zur Anwendung bei dem Verfahren.

Ein Verfahren und eine Transportvorrichtung der genannten Art finden heute beispielsweise bei industriellen Produktionsprozessen vielfach Anwendung. Hierbei wird am Ende einer oft langen und aufwendigen Fertigungskette die Qualitätssicherung durchlaufen. Hierzu werden bei den bekannten Verfahren an der Prüfstation Funktionskontrollen vorgenommen, die Aufschluss über die Abweichung vom Soll-Zustand geben sollen. Als fehlerhaft erkannte Ladungseinheiten werden anschließend ausgeschleust, der separaten Nacharbeitsstation zugeführt und der Fehler dort behoben. Hierbei erweist sich als hinderlich, dass von der vorgegebenen Abfolge der verschiedenen Ladungseinheiten der Ladung nicht abgewichen werden darf. Daher werden die fehlerfreien Ladungseinheiten während der Nachbearbeitung der fehlerhaften Ladungseinheiten in dem Puffer zurückgehalten und erst dann der nachfolgenden Station zugeführt, wenn die nachgearbeitete Ladungseinheit an der zuvor ausgeschleusten Position wieder eingeschleust worden ist. Der Puffer muss hierzu eine vergleichsweise große Kapazität aufweisen, wobei zudem eine möglichst gleichbleibende Auslastung der Nacharbeitsstation bzw. des hier beschäftigten Personals sicherstellen werden soll. Im Anschluss daran wird die Ladung zur Abholung in einem Beladepuffer bereitgestellt. Die Bereitstellung ist dabei derart auszuführen, dass eine Verladung auf ein Kraftfahrzeug oder einen Güterwagen möglichst reibungslos erfolgen kann, sobald dieser eintrifft. Es sind daher immer bereits vorausschauend eine ausreichende Anzahl von Ladungen bereitzustellen, um Verzögerungen zu vermeiden. Zur optimalen Nutzung des zur Verfügung stehenden Raumangebotes sind dabei mehrere Ebenen vorgesehen. Die Vorhaltung eines großen Lagerraums und einer derart großen Anzahl von Ladungseinheiten ist aufgrund der hohen Kapitalbindung und des hohen Zeitaufwands für das Handling nicht mehr akzeptabel.

Der Erfindung liegt das Problem zugrunde, ein Verfahren der eingangs genannten Art so zu gestalten, dass der Prozess zur Bereitstellung der Ladung vereinfacht wird. Insbesondere soll die hierzu erforderliche Zeit verkürzt werden. Weiterhin soll eine Transportvorrichtung zur Anwendung bei dem Verfahren entwickelt werden, durch die der Transportaufwand reduziert und vereinfacht werden kann.

Das erstgenannte Problem wird erfindungsgemäß dadurch gelöst, dass der Puffer zugleich zur Nachbearbeitung fehlerhafter Ladungseinheiten und zur Bereitstellung der Ladung genutzt wird. Hierdurch kann mit lediglich einem gemeinsamen Puffer und einem Fördermittel sowohl die Nacharbeitung als auch die Bereitstellung realisiert werden, so dass einerseits der Platzbedarf, andererseits der Steuerungsaufwand wesentlich reduziert werden kann. Dabei wird die zur Nachbearbeitung ausgeschleuste Ladungseinheit unmittelbar in die zur Abholung bereitgestellte Ladung eingeschleust. Daher tritt auch keine Verzögerung des Herstellungsprozesses ein, da die Ladung in jedem Fall frühzeitig zusammengestellt werden muss. Durch den so vereinfachten Ablauf wird die Ladezeit verkürzt, weil die zur Nacharbeitung erforderliche Zeit im wesentlichen keine Rückwirkungen auf die fehlerfrei durchlaufenden Ladungseinheiten hat.

Eine besonders vorteilhafte Ausführungsform der Erfindung ist dadurch gegeben, dass die Ladungseinheiten an jeweils einem Ladungsträger lösbar fixiert sind und dass anstelle einer ausgeschleusten Ladungseinheit ein Ladungsträger ohne Ladungseinheit eingeschleust wird. Hierdurch kann der leere Ladungsträger als Platzhalter fungieren, um so eine Einordnung der später einzuschleusenden, nachgearbeiteten Ladungseinheit zu erleichtern. Der leere Ladungsträger wird hierzu einfach gegen den Ladungsträger mit der entsprechenden Ladungseinheit ausgetauscht und nimmt so ohne weiteres die korrekte Position ein. Daher entfällt auch zugleich der Aufwand zur Schaffung einer Lücke zwischen den im allgemeinen aneinandergrenzend gelagerten Ladungsträgern. Es besteht aber auch die Möglichkeit, die einzuschleusende Ladungseinheit auf den leeren Ladungsträger aufzusetzen.

Eine andere vorteilhafte Weiterbildung der Erfindung ist dann erreicht, wenn die Ladungsträger in einem Kreislauf geführt werden. Hierdurch werden Kollisionen vermieden und so der Steuerungsaufwand reduziert. Zugleich wird die Einhaltung einer vorgegebenen Reihenfolge sichergestellt und die Durchlaufgeschwindigkeit erhöht.

Eine andere, besonders einfache Weiterbildung der Erfindung ist dadurch gegeben, dass der Einfluss der Schwerkraft zur Bewegung der Ladung genutzt wird. Eine hierzu beispielsweise gegenüber der Horizontalen geneigte Ebene ermöglicht einen weitgehend selbsttätigen Durchlauf der Ladungsträger. Hierzu werden die mit der Ladungseinheit bestückten Ladungsträger in einer oberen Ebene in Richtung auf die Bereitstellung/Übergabestellen hingeführt. Bei Entnahme oder Transport eines vorangehenden Ladungsträgers gelangen die nachfolgenden Ladungsträger somit selbsttätig zu der Bereitstellung/den Übergabestellen.

Das zweitgenannte Problem, die Schaffung einer Transportvorrichtung zur Anwendung bei dem Verfahren, mittels der zur Bereitstellung einer durch Ladungseinheiten gebildeten Ladung die Ladungseinheiten in unterschiedlichen Ebenen verfahrbar sind und die ein Vertikalförderelement zum Transport von Ladungseinheiten zwischen den Ebenen hat, wird erfindungsgemäß dadurch gelöst, dass das Vertikalförderelement mittels Schwerkraft betätigbar ist. Hierdurch kann einerseits die zum Betrieb eines elektromotorischen Vertikalförderelementes erforderliche Energie eingespart werden, andererseits kann zugleich auch der zur Steuerung der Bereitstellung erforderliche Aufwand reduziert werden. Dabei können die übereinander angeordneten Ebenen mühelos miteinander verbunden und so der Austausch eines vergleichsweise schweren, mit der Ladungseinheit bestückten Ladungsträgers gegen einen vergleichsweise leichten, nicht bestückten Ladungsträger mühelos oder auch selbsttätig vorgenommen werden.

Hierzu ist eine Ausführungsform besonders günstig, wenn das Vertikalförderelement ein Senker ist. Dadurch wird die auf dem Vertikalförderelement positionierte Ladungseinheit selbsttätig in die darunterliegende Ebene abgesenkt. Das so ausgeführte Vertikalförderelement kann daher auf kleinstem Raum eingesetzt werden und so das Transportvolumen minimieren.

Besonders hilfreich ist es auch, wenn das Vertikalförderelement einen Dämpfer hat. Die Abwärtsbewegung kann dadurch auf ein je nach Art und Beschaffenheit der Ladungseinheit zulässiges Maß begrenzt werden.

Eine andere günstige Weiterbildung wird erreicht, indem das Vertikalförderelement einen Energiespeicher, z. B. ein Federelement, hat. Hierdurch kehrt eine den Ladungsträger oder die Ladungseinheit aufnehmende Förderplattform des Vertikalförderelementes nach dem Absenken und dem Entfernen der Last selbsttätig in ihre der oberen Ebene zugeordnete Ruheposition zurück. Dort kann das Vertikalförderelement sofort erneut eingesetzt werden, so dass im wesentlichen zur Betätigung lediglich das Einschieben der Ladungseinheit oder des Ladungsträgers erforderlich ist. Der Absenkprozess sowie das Ausstoßen der Ladungseinheit erfordert hingegen keinen äußeren Eingriff.

Eine andere besonders vorteilhafte Weiterbildung der Erfindung ist dadurch gegeben, dass das Vertikalförderelement mit einer Steuereinheit verbunden ist. Hierdurch kann mittels der Steuereinheit eine Überwachung des Förderprozesses vorgenommen werden. Insbesondere kann die Steuereinheit den selbsttätigen Förderprozess beenden, um so die Bereitstellung abzuschließen. Die so gewonnenen Daten können beispielsweise auch einer Betriebsdatenerfassung zugeführt und zentral überwacht werden.

Besonders hilfreich ist eine Ausgestaltung der Erfindung, bei der das Vertikalförderelement im Inneren eines Laderaumes angeordnet ist. Hierdurch ist es möglich, ein Höchstmaß der zur Verfügung stehenden Kapazität des Laderaumes zu nutzen. Hierzu ist das Vertikalförderelement beispielsweise an einer einer Beladeöffnung gegenüberliegenden Begrenzung angeordnet. Die Ladungseinheiten werden auf der oberen Ebene in den Laderaum eingeführt und verdrängen einen in der unteren Ebene befindlichen entsprechenden Ladungsträger bzw. den entsprechenden Platz. Die Nutzbarkeit des Laderaumes wird daher durch das Vertikalförderelement in lediglich unerheblichem Maß eingeschränkt.

Besonders günstig ist auch eine Ausführungsform der vorliegenden Erfindung, wenn der Laderaum Bestandteil eines Kraftfahrzeuges ist. Hierdurch kann eine schnelle und einfache Beladung unabhängig von weiteren Hilfsmitteln vorgenommen werden. Der Laderaum ist hierzu beispielsweise mit zwei Ebenen ausgestattet, die aufgrund des Vertikalförderelementes, das beispielsweise an einer Stirnwand des Laderaumes angeordnet ist, in vollem Umfang genutzt werden können.

Hilfreich ist auch eine Weiterbildung der Erfindung, bei der die Transportvorrichtung ein zum Fördern der Ladungseinheiten ausgeführtes, schienengebundenes Fördermittel hat. Dieses kann beispielsweise ein Flurfördermittel sein, das hierzu auf Schienen verfahrbar ist. Diese Schienen können beispielsweise gegenüber der Horizontalen geneigt sein und mit dem Vertikalförderelement zusammenwirken. Es können so aufeinanderfolgende Abläufe ohne äußere Steuerungseingriffe erreicht werden.

Eine günstige Weiterbildung wird auch dann erreicht, wenn das Fördermittel eine Elektrohängebahn hat. Hierdurch kann das Fördermittel problemlos in unterschiedlichen Ebenen flexibel eingesetzt werden. Zugleich kann die Elektrohängebahn als Element des Vertikalförderelementes ausgeführt sein, um so die verschiedenen Förderfunktionen zusammenfassen zu können.

Eine besonders sinnvolle Ergänzung der Erfindung wird erreicht, indem das Fördermittel eine Kennzeichnung aufweist. Hierdurch kann eine einfache visuelle oder elektronische Überwachung des Transportvorganges erfolgen. Beispielsweise können unterschiedliche Ladungseinheiten verschiedenen Fördermitteln zugeordnet werden, um so eine weitere Vereinfachung der Steuerung zu erreichen.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: in einer Prinzipdarstellung eine Draufsicht auf eine Produktionslinie,
- Fig. 2: eine Seitenansicht der in Figur 1 dargestellten Produktionslinie.

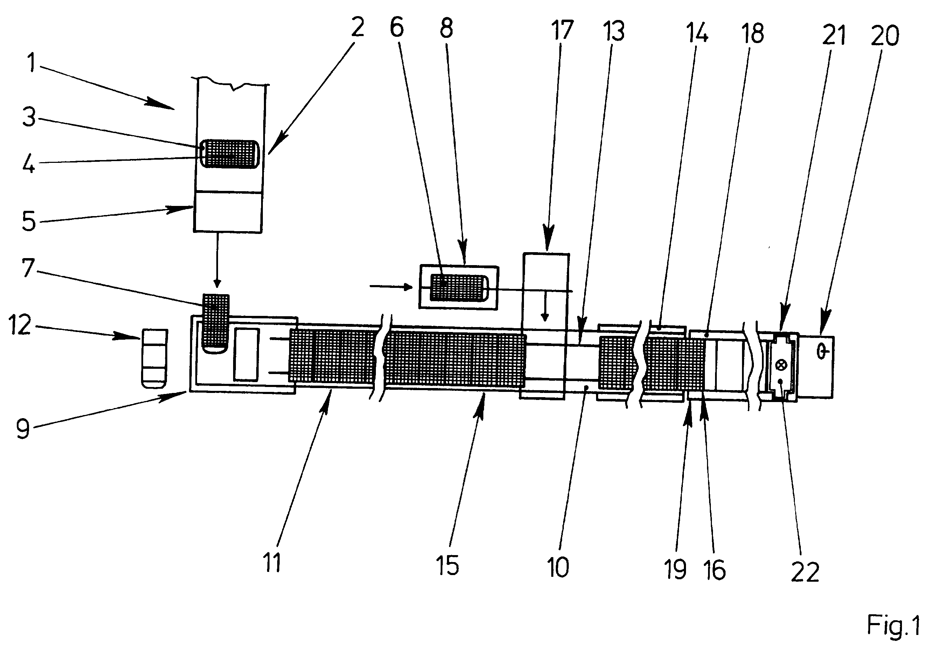

Figur 1 zeigt in einer Draufsicht eine Prinzipdarstellung einer Produktionslinie 1. Die Produktionslinie 1 hat eine Montagelinie 2, auf der eine an einem Ladungsträger 3 angeordnete Ladungseinheit 4 einer Prüfstation 5 zugeführt wird. In dieser Prüfstation 5 wird eine Unterteilung in fehlerhafte Ladungseinheiten 6 und fehlerfreie Ladungseinheiten 7 vorgenommen. Die fehlerhafte Ladungseinheit 6 wird anschließend einer Nachbearbeitungsstation 8 zugeführt. Die fehlerfreien Ladungseinheiten 7 werden mittels eines automatischen Umsetzers 9 auf eine obere Ebene 10 einer Bereitstellungslinie 11 umgesetzt, wobei zugleich für jede ausgeschleuste fehlerhafte Ladungseinheit 6 ein leerer Ladungsträger 12 eingeschleust wird. Eine Transportvorrichtung 13 ermöglicht den problemlosen Transport fehlerfreier Ladungseinheiten 7 auf der Bereitstellungslinie 11 in Richtung einer Ablieferstation 14. In der als Puffer 15 ausgeführten Ablieferstation 14 werden mehrere Ladungseinheiten 7 zu einer Ladung 16 zusammengefasst und zur Ablieferung bereitgestellt. Zugleich wird die zunächst fehlerhafte und nach dem Durchlaufen der Nachbearbeitungsstation 8 fehlerfreie Ladungseinheit 6 gegen den als Platzhalter genutzten leeren Ladungsträger 12 mittels einer Nachbearbeitungseinschleusung 17 ausgetauscht und nimmt somit wieder ihren vorbestimmten Platz ein. Es ist gleichfalls möglich, auf die obenerwähnte Einschleusung eines leeren Ladungsträgers 12 zu verzichten und statt dessen die zunächst fehlerhafte und nach dem Durchlaufen der Nachbearbeitungsstation 8 fehlerfreie Ladungseinheit 6 an die richtige Stelle mittels der Nachbearbeitungseinschleusung 17 einzufügen. Die derart zusammengestellte Ladung 16 wird anschließend in eine obere Ebene 18 eines Laderaumes 19 eines Kraftfahrzeuges 20 gefördert. Hierbei verdrängen die Ladungseinheiten 7 ursprünglich in dem Kraftfahrzeug 20 vorhandene leere Ladungsträger 12, die in einer nicht dargestellten unteren Ebene entgegen der Förderrichtung der oberen Ebene 18 aus dem Laderaum 19 herausgefahren werden. Hierzu dient ein als Senker ausgeführtes Vertikalförderelement 21, das eine auf einer Förderplattform 22 positionierte Ladungseinheit 7 nach unten in eine nicht dargestellte untere Ebene absenkt und diese anschließend freigibt. Mittels eines nicht dargestellten Federelementes kehrt die Förderplattform 22 anschließend in die obere Ebene 18 zurück und steht zum erneuten Absenken zur Verfügung.

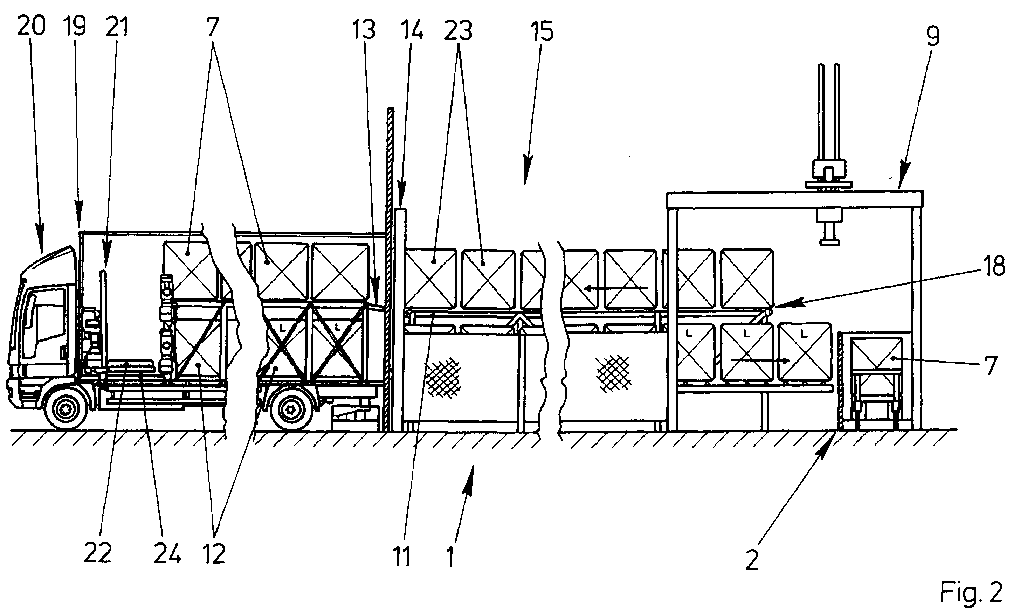

Figur 2 zeigt eine vereinfachte Seitenansicht der in Figur 1 dargestellten Produktionslinie 1, wobei auf eine Darstellung der Einschleusung nachgearbeiteter Ladungseinheiten aufgrund der besseren Übersichtlichkeit verzichtet wurde. Zu erkennen ist der automatische Umsetzer 9, mittels dessen die fehlerfreie Ladungseinheit 7 von der Montagelinie 2 auf die obere Ebene 18 der als Puffer 15 ausgeführten Bereitstellungslinie 11 umgesetzt wird. Auf dieser Bereitstellungslinie 11 wird die Ladungseinheit 7 mittels der Transportvorrichtung 13 einer Ablieferstation 14 zugeführt. Von dort gelangt die Ladungseinheit 7 in den Laderaum 19 des Kraftfahrzeuges 20. Durch nachfolgende weitere Ladungseinheiten 23 gelangt die Ladungseinheit 7 auf die F6rderplattform 22 des als Senker ausgeführten Vertikalförderelementes 21 und dadurch in eine untere Ebene 24 des Laderaumes 19. Zugleich werden die in dem Laderaum 19 ursprünglich vorhandenen leeren Ladungsträger 12 schrittweise entgegen der Förderrichtung der Ladungseinheiten 7, 23 nach hinten verschoben. In der dargestellten Position des Vertikalförderelementes 21 ist eine zuvor abgesenkte Ladungseinheit bereits der Förderplattform 22 entnommen, so dass die Förderplattform 22 mittels eines nicht dargestellten Federelementes in ihre Ruheposition in der oberen Ebene 18 zurückkehrt.

Durch die Ausführung der Transportvorrichtung 13 als umlaufendes System ist die Einhaltung einer vorgegebenen Reihenfolge der Ladungseinheiten 7, 23 sichergestellt.

## Patentansprüche

1. Verfahren zum Verladen einer mehrere Ladungseinheiten umfassenden Ladung in einen Laderaum,insbesondere eines Kraft- oder Schienenfahrzeugs, bei welchem Verfahren die Ladungseinheiten zunächst in einer Prüfstation auf einen vorhandenen Fehler geprüft, eine fehlerhafte Ladungseinheit ausgeschleust und einer Nacharbeitsstation zugeführt wird und bei dem ein Puffer vorgesehen ist, der das Einschleusen der zuvor ausgeschleusten Ladungseinheit an einer gewünschten Position der Ladungen ermöglicht und bei dem die Ladungseinheiten in verschiedenen Ebenen geführt werden, **dadurch gekennzeichnet**, dass der Puffer zugleich zur Nachbearbeitung fehlerhafter Ladungseinheiten und zur Bereitstellung der Ladung genutzt wird.

2. Verfahren nach Anspruch 1, **dadurch gekennzeichnet**, dass die Ladungseinheiten an jeweils einem Ladungsträger lösbar fixiert sind und dass anstelle einer ausgeschleusten Ladungseinheit ein Ladungsträger ohne Ladungseinheit eingeschleust wird.

3. Verfahren nach Anspruch 1 oder 2, **dadurch gekennzeichnet**, dass die Ladungsträger in einem Kreislauf geführt werden.

4. Verfahren nach einem der vorhergehenden Ansprüche, **dadurch gekennzeichnet**, dass der Einfluss der Schwerkraft zur Bewegung der Ladung genutzt wird.

5. Transportvorrichtung zur Anwendung bei dem Verfahren nach einem der vorangegangenen Ansprüche, mittels der zur Bereitstellung einer durch Ladungseinheiten gebildeten Ladung die Ladungseinheiten in unterschiedlichen Ebenen verfahrbar sind und die ein Vertikalförderelement zum Transport von Ladungseinheiten zwischen den Ebenen hat, **dadurch gekennzeichnet**, dass das Vertikalförderelement (21) mittels Schwerkraft betätigbar ist.

6. Transportvorrichtung nach einem der vorhergehenden Ansprüche, **dadurch gekennzeichnet**, dass das Vertikalförderelement (21) ein Senker ist.

7. Transportvorrichtung nach einem der vorhergehenden Ansprüche, **dadurch gekennzeichnet**, dass das Vertikalförderelement (21) einen Dampfer hat.

8. Transportvorrichtung nach einem der vorhergehenden Ansprüche, **dadurch gekennzeichnet**, dass das Vertikalförderelement (21) einen Energiespeicher hat.

9. Transportvorrichtung nach einem der vorhergehenden Ansprüche, **dadurch gekennzeichnet**, dass das Vertikalförderelement (21) mit einer Steuereinheit verbunden ist.

10. Transportvorrichtung nach einem der vorhergehenden Ansprüche, **dadurch gekennzeichnet**, dass das Vertikalförderelement (21) im Inneren eines Laderaumes (19) angeordnet ist.

11. Transportvorrichtung nach Anspruch 10, **dadurch gekennzeichnet**, dass der Laderaum (19) Bestandteil eines Kraftfahrzeuges (20) ist.

12. Transportvorrichtung nach einem der vorhergehenden Ansprüche, **gekennzeichnet durch** ein zum Fördern der Ladungseinheiten (7, 23) ausgeführtes, schienengebundenes Fördermittel.

13. Transportvorrichtung nach einem der vorhergehenden Ansprüche, **dadurch gekennzeichnet**, dass das Fördermittel eine Elektrohängebahn hat.

14. Transportvorrichtung nach einem der vorhergehenden Ansprüche, **dadurch gekennzeichnet**, dass das Fördermittel eine Kennzeichnung aufweist.
